Europäisches Patentamt

European Patent Office

Office européen des brevets

(19)

(11) Publication number: **0 095 790**
**B1**

(12) **EUROPEAN PATENT SPECIFICATION**

(45) Date of publication of patent specification: **03.09.86**

(21) Application number: **83200500.3**

(22) Date of filing: **11.04.83**

(51) Int. Cl.⁴: **B 65 H 20/06,** G 03 B 27/58,
B 65 H 19/22

(54) **Apparatus for collecting and temporarily storing sheets.**

(30) Priority: **20.05.82 GB 8214740**

(43) Date of publication of application:
**07.12.83 Bulletin 83/49**

(45) Publication of the grant of the patent:
**03.09.86 Bulletin 86/36**

(84) Designated Contracting States:
**BE DE FR GB NL**

(56) References cited:
**DE-A-2 345 823**
**DE-A-2 516 226**
**US-A-1 959 418**
**US-A-2 353 821**
**US-A-2 821 347**
**US-A-2 923 487**
**US-A-3 957 220**
**US-A-3 970 268**
**US-A-4 034 928**

(73) Proprietor: **AGFA-GEVAERT naamloze
vennootschap
Septestraat 27
B-2510 Mortsel (BE)**

(72) Inventor: **Verbruggen, Herman Fernand
De Stevens 3
B-2240 Zandhoven (BE)**

Courier Press, Leamington Spa, England.

## Description

The present invention relates to an apparatus for collecting and temporarily storing sheets or the like. The invention is particularly useful in connection with the automatic processing of photographic diffusion transfer materials of the peel-apart type.

Apparatus for automatic processing of photographic diffusion transfer materials are well-known. Generally such apparatus are intended for processing only one format of photographic sheets.

In such apparatus an image-wise exposed light-sensitive sheet is inserted, with a predetermined lead with respect to the image-receiving sheet, for being processed and being brought into contact with said image-receiving sheet, forming a sandwich therewith and preserving said lead with respect to said image-receiving sheet throughout the contact and diffusion stages of the processing. After diffusion of the image, the sheets are separated. This can be done with the aid of means, e.g. a lever, which presses on said lead so as to deflect the originally light-sensitive sheet in a direction substantially different from the direction in which the image-receiving sheet is advanced to a collection zone. The separated originally light-sensitive sheet is merely dropped into a receptacle or the like in which the successively processed sheets pile up in disorderly fashion. the resulting shapeless and sticky pile is difficult and unpleasant to handle.

It is an object of the present invention to provide an apparatus by which wet, moist or damp sheets can be more conveniently collected and temporarily stored.

A winder for coiling a continuous web of sheet material on a roll is described in U.S. 1,959,418, issued May 22, 1934 to C. A. Fourness. Another apparatus for winding an endwise compressed sheet of cellulosic tissue into the form of a roll is disclosed in U.S. 2,353,821, issued July 18, 1944 to C. A. Fourness on which is based the precharacterising portion of claim 1, and comprises in combination, an endless belt, guide pulleys for said belt, means for driving said belt, a core member engaged with and rotated by a loop of said belt, means for directing the advance end of said sheet into the nip of said core member and belt to effect winding of said sheet on said core member and tensioning means for said belt. These prior art winders, however, are not suitable for successively collecting and temporarily storing separate sheets, possibly of different sizes or formats.

It is an object of the present invention to provide an apparatus for colecting and temporarily storing sheets as a unit that is preferably incorporated into the housing of an apparatus for the automatic processing of photographic diffusion transfer materials of the peel-apart type. This object is attained by the apparatus according to claim 1.

In such an apparatus generally a means is provided to automatically peel-apart the originally light-sensitive sheet and the image-receiving sheet of the sandwich. Advantageously such means comprises means for detecting, after the diffusion stage, the presence or arrival of said sandwich, e.g with photocells or microswitches, which in their turn actuate lever means or the like to press selectively upon the leading edge of the light-sensitive sheet extending beyond the image-receiving sheet, so as to make the first of said sheets deviate from the direction in which the sandwich was originally advancing, whilst the second of said sheets is still advancing substantially in that same original direction for occasional further treatment. The deviated originally light-sensitive sheet is still wet and can then be conveyed towards a collecting and storing apparatus according to the present invention.

Advantageously, the housing of an apparatus as above described is pivotally or slidingly supported within the processing apparatus by means which allow easy access to the apparatus of the invention.

The apparatus for collecting and temporarily storing sheets successively fed thereto around a pick-up roller comprises:

— a first, a second and a third roller disposed parallel to each other, said third roller being the pick-up or accumulator roller, wherein during the collecting of said sheets the distance between the facing surfaces of said first and second roller remains smaller than the diameter of said third roller with no sheets wrapped around it;

— at least one endless belt running over said three rollers during the collecting of said sheets so as to form a loop surrounding said third roller, wherein said belt is running from said first roller over and around said third roller towards said second roller or from said second roller over and around said third roller towards said first roller and wherein the side of said endless belt directly contacting said first and said second rollers is the same and is opposite to the side of said belt directly contacting said third roller or the collected and stored sheets wrapped around said third roller, whereby the sense of rotation of both said first and said second rollers is the same and is opposite to the sense of rotation of said third or pick-up roller;

— means for feeding said sheets between said first and said second rollers and for conveying said sheets into a nip formed by said third or pick-up roller and said endless belt so as to have said sheets gripped between said pick-up roller and said loop in said endless belt;

— means for tensioning said endless belt so that said third or pick-up roller is urged towards said first and second rollers during the collecting of said sheets, with the proviso, however, that said tensioning means does not impede a gradual increase of said loop surrounding said pick-up roller according to the number of sheets inserted and temporarily stored between said pick-up roller and said endless belt, and

— means for actuating said endless belt.

The first of said three rollers is supported by the housing of said apparatus and the second of said rollers is supported by a frame in said housing, wherein said frame is displaceable within said housing between two extreme fixed positions, one of said extreme fixed positions being the operational position of said apparatus for collecting and temporarily storing sheets and being the fixed position in which said second roller is in close facing relationship with respect to said first roller, i.e. the position wherein the distance between the facing surfaces of said first and said second roller is smaller than the diameter of said third or pick-up roller without sheets wrapped around it, the other extreme fixed position being the fixed position for the removal of the pick-up roller, possibly with a number of sheets wrapped around it, in which fixed position the distance between the facing surfaces of said first and second rollers is greater than the diameter of said pick-up roller, possibly with a number of sheets wrapped around it, said frame being latchable in said housing at least in said fixed operational position of said apparatus.

When a said three-roller apparatus is in its fixed operational position, said first, second and third rollers are initially disposed in close facing relationship to each other and the relative positions of the axes of said first and second rollers remain fixed, whereas the axis of said third roller is capable of gradually moving away from the aforesaid fixed axes of said first and second rollers as imposed by the number of sheets that is fed into said apparatus and that is stored between said third roller and said loop in said endless belt.

The endless belt preferably permanently extends through an angle oif at least 270° around the periphery of the accumulator roll, when the apparatus is in operation.

Means are provided for guiding and supporting said third roller when it is gradually moving away from said fixed axes of said first and second rollers depending on the number of sheets that is fed into said apparatus and that is stored between said third roller and said loop in said endless belt, wherein said guiding and supporting means are pivotally secured to said housing and are capable to follow the displacement of said frame in said housing between said extreme fixed positions, thereby supporting said third roller in whatever position of said frame, preventing thereby said third roller from falling when said frame is brought into a position in which the withdrawal of said third roller from said apparatus is possible.

The means for permanently tensioning said engless belt can be a roller freely suspended within said endless belt and supporting a load tensioning said endless belt permanently by gravity or it can be a spring means acting upon said endless belt.

In apparatus according to the present invention, said rollers and the co-operating endless belt preferably have a surface that is chemically inert and that has a friction coefficient that permits mutual frictional cooperation between said rollers, said sheets and said endless belt.

In order to facilitate removal of accumulated sheets from the accumulator roll, it is advantageous for this roll to be constructed in component sections which can be separated for releasing or facilitating the release of the accumulated sheets. Preferably the roll comprises complementary core portions, e.g. two half-core portions, which couple together in co-axial relationship. Most preferably said core portions are of tapering form and couple together at their narrower ends to form a core which is of larger diameter at its end regions than at its central region, i.e. the accumulator or pick-up roller comprises two truncated conical parts connected to each other so that the diameter of said roller is larger at its extremities than it is in its central area and the roller parts can be disconnected at the central area of said roller. The largest diameter of said roller is always greater than the gap between said first and second rollers during the collection of said sheets.

In a particular embodiment the truncated conical parts are formed at their narrower ends for pin and socket coupling, one part having a pin which frictionally or threadedly engages a receptive hole or socket in the other part.

The endless belt can have a width as great or substantially as great as the length of the accumulator roller, or the belt can have a significantly smaller width, e.g. a width equal to about one third of the length of the accumulator roll. Such a narrower belt can contact the accumulator roll at its central region.

It is also possible to provide two or more laterally spaced apart endless belts in lieu of one single endless belt. In this event, each of said endless belts contacts the roller or each of said rollers and runs over the latter the same way as does the one single endless belt. The two or more belts can contact the accumulator or pick-up rollewr at different positions along its length.

A method for collecting and temporarily storing sheets, using a three-roller type apparatus as above described, comprises the steps of:

— bringing said apparatus into said operational position for collecting and temporarily storing sheets by bringing said second roller in close facing relation with respect to said first roller;

— actuating said endless belt and making it run over said rollers in such a way that the sense of rotation of both said first and second rollers is the same and is opposite to the sense of rotation of said third roller and that said third roller is encompassed in said loop in said endless belt;

— inserting each of said sheets between said endless belt and said third roller;

— urging and maintaining said sheets between said endless belt and said third roller by tensioning said endless belt;

— making said sheets follow the movement of said third roller when they are inserted between said third roller and said endless belt;

— stopping the movement of said endless belt over said rollers;

— bringing said apparatus into said position for removing said third roller, and

— removing said third roller provided with sheets wrapped around it.

It is clear that in the above-described method two or more endless belts can be used in lieu of one.

One of the advantages of the apparatus of the present invention is that wet processed sheets can now be reduced to a compact hollow cylinder that is much easier to handle than is a sticky mass of randomly piled-up sheets.

Another advantage of the present invention is that sheets of substantially different formats can be successfully collected and stored at random with one and the same apparatus without requiring any kind of transformation of the said apparatus therefor.

The present invention will be described hereinafter with reference to a particular but not limiting embodiment illustrated by the accompanying drawings, in which:

Fig. 1 is a side elevational view of the apparatus in its fixed operation position, but still without any sheets stored;

Fig. 2 is an enlarged view of the part indicated by the reference II in fig. 1, but wherein a first sheet is being collected;

Fig. 3 is the same view as fig. 1, but wherein a number of sheets has already been stored;

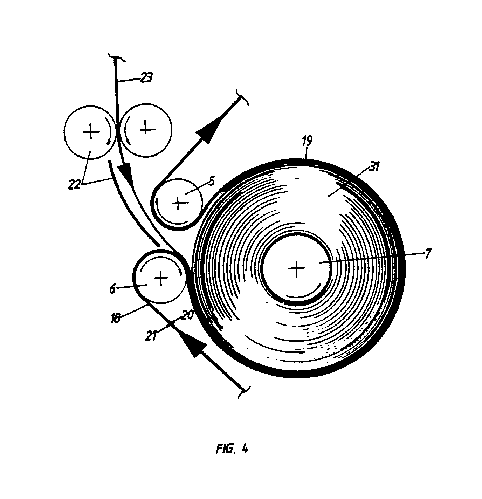

Fig. 4 is an enlarged view of the part indicated by the reference IV in fig. 3;

Fig. 5 is a side elevational view of the apparatus wherein the frame is unlocked from its operational position;

Fig. 6 is a side elevational view of the apparatus in its fixed position allowing the removal of the pick-up roller and the stored sheets;

Fig. 7a is a perspective view of the third or pick-up roller, and

Fig. 7b is an exploded view of said third or pick-up roller.

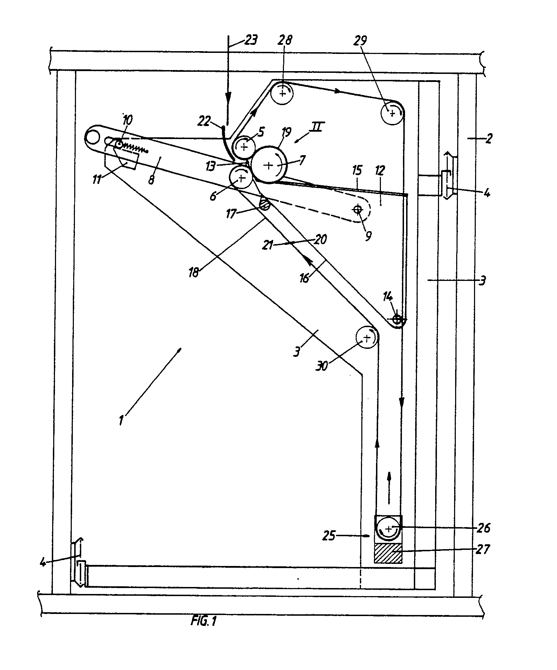

As illustrated in fig. 1, the apparatus 1 of the present invention is incorporated into the housing 2 of an apparatus for the automatic processing of photographic diffusion transfer materials of the peel-apart type and housing 3 of apparatus 1 is represented as being slidingly movable within housing 2 through pivot or sliding means 4 so that it can be withdrawn from housing 2, at least partially, through an opening provided in one of the side walls of said processing apparatus.

Apparatus 1 generally comprises a first, a second and a third roller, respectively identified by numerals 5, 6 and 7 which are disposed parallel to each other, wherein the third roller 7 is called the accumulator or pick-up roller.

In the particular embodiment represented in the drawings, the first roller 5 is supported by housing 3 of apparatus 1, whereas the second roller 6 is supported by a frame 8 that is pivotally secured to housing 3 by a hinge-pin 9. Locking means 10 are provided in frame 8 for cooperating with cam means 11 in housing 3 in order to keep frame 8 latched in at least one of two extreme fixed positions.

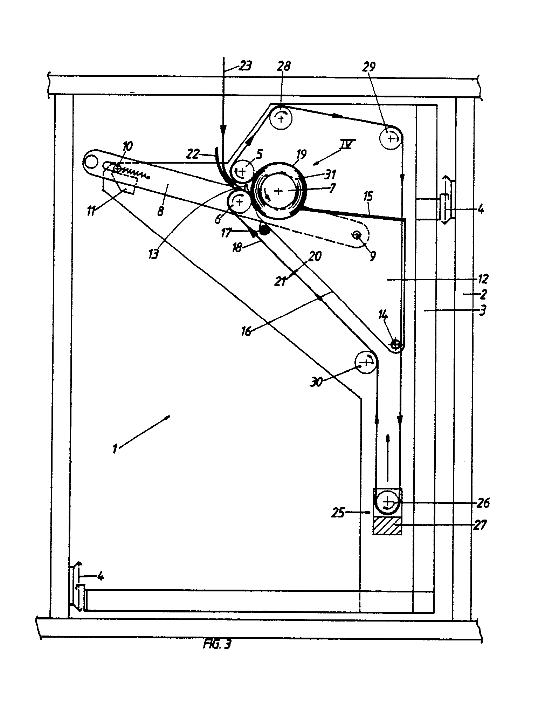

In figs. 1 and 3, frame 8 is latched in its upper extreme position, said position is fixed and is called the operational position of apparatus 1, i.e. the position in which sheets can be collected and stored according to the present invention. In the latter position, second roller 6 always remains in close facing relationship with first roller 5, i.e. in a position wherein the gap or distance between the facing surfaces of said first roller 5 and said second roller 6 is always smaller than the largest diameter of the pick-up or accumulator roller 7 without any sheets wrapped around it.

A pair of guiding means 12 is provided on both sides of apparatus 1 in order to support pick-up roller 7 at both its extremities.

For the sake of clarity, however, only one such guiding means 12 is represented in the drawings and consequently the description will merely refer to that one guiding means 12.

Third roller 7 is freely supported by guiding means 12 presenting a hooked end or finger stop 13 in order to prevent roller 7 from falling down when frame 8 is unlocked and is moved out of the said fixed operational position, as will be described herinafter.

Guiding means 12 are pivotally secured to housing 3 by means of hinge-pin 14 so as to be able to follow, at least partially, frame 8 when the latter is moved from one of its exteme fixed positions to the other.

The guiding means 12 of the apparatus 1 can advantageously be designed in a triangular form, for instance, wherein roller 7 is freely supported by a side 15 that can have the shape of a rail or the like, cooperating with an extremity of roller 7, whereas another side of said triangular means 12, e.g. side 16, is designed to cooperate with a roller 17 or the like, e.g. a pin or a stud, fixed to frame 8 and permanently supporting triangular guiding means 12 in whatever position of frame 8.

In the fixed operational position of apparatus 1, an endless belt 18 is running over rollers 5, 6 and 7 so as to turn a loop 19 surrounding the third or pick-up roller 7. Belt 18 is therefore running from second roller 6 over and around third roller 7 towards first roller 5, or vice versa, wherein side 20 of belt 18 directly contacting rollers 5 and 6 is the same but is opposite to side 21 of belt 18 directly contacting third roller 7 or the sheets possibly wrapped around it. As a consequence of this particular formation of loop 19 in belt 18 between rollers 5, 6 and 7, rollers 5 and 6 both rotate in one and the same sense, whereas roller 7 rotates in the opposite sense when endless belt 18 is runing over said rollers 5, 6 and 7.

In order to have the apparatus of the invention collect and store sheets of substantially different formats equally well between pick-up roller 7 and loop 19, the latter should preferably surround permanently roller 7, possibly with a number of sheets wrapped around it, over as large a circumferential area as possible, e.g. over an area corresponding to an angle of at least 270°.

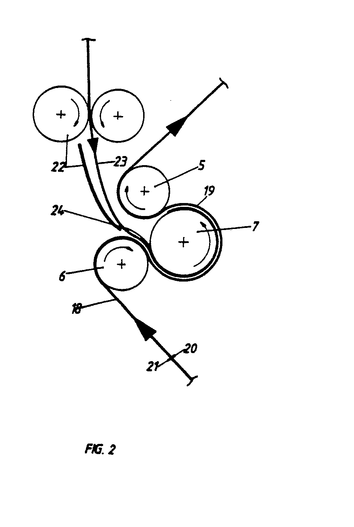

Means 22, e.g. consisting of a pair of feeding rollers and/or of a sheet deflector, are provided for feeding a sheet 23 between rollers 5 and 6 and for conveying said sheet into a nip 24 formed by roller 7 and endless belt 18 (fig. 2).

When belt 18 is advancing in the direction as indicated in the drawings, a sheet 23 inserted into nip 24 between roller 7 and loop 19 is forced to follow the rotational movement of roller 7.

In the fixed operational position of apparatus 1, the first, second and third rollers, 5, 6 and 7 respectively, are initially disposed in close facing relationship to each other and the relative positions of the axes of said first and second rollers 5 and 6 respectively remain both fixed.

According to the number of sheets that is fed into apparatus 1 and that is stored between pick-up roller 7 and loop 19 in endless belt 18, the axis of the third or pick-up roller 7 is, however, capable of gradually moving away from the aforesaid fixed axes of rollers 5 and 6.

A means 25, e.g. consisting of a roller 26 freely suspended within endless belt 18 and supporting a load 27, is provided for tensioning endless belt 18, so that loop 19 is continuously pressed against roller 7 or against the sheets possibly wrapped around it, whereby roller 7 is automatically and constantly urged towards first roller 5 and second roller 6 when apparatus 1 is in its said operational position.

The tensioning of belt 18 does not necessarily need be performed by gravity as it is through roller 26 and load 27 in the present practical embodiment, but it may, alternatively, as well be realized by spring means or the like (not shown) acting upon belt 18.

Means 25 may not, however, impede the gradual increase of loop 19 around roller 7 when sheets are inserted and stored between roller 7 and loop 19.

Endless belt 18 may be actuated, e.g. by an electromotor (not shown), either directly or indirectly through the intermediary of one of said rollers 5 and/or 6 or through one or more supplementary rollers 28, 29 and 30, provided along the circumference of endless belt 18 and possibly serving the purpose of guiding belt 18 in such a way as to not impede the growth of loop 19 around pick-up roller 7 according to the number of sheets that is stored between them and to yet keep the dimensions of apparatus 1 minimal. Actuation of belt 18 may as well be realized through gears and chain drives or the like, which either act upon one or more of the aforesaid rollers 5, 6, 28, 29 and/or 30 or directly upon belt 18, e.g. by friction.

As the sheets to be collected and stored are still carrying some of the processing liquid, it is advantageous to have the said rollers and the said endless belt made of chemically inert material, which is to be chosen in such a way that frictional cooperation between said rollers, said sheets and said endless belt is possible.

In the present example rollers 28 and 29 are, for instance, provided in housing 3 above and behind first roller 5 so as to define and cover a free space in which roller 7 and loop 19 are gradually penetrating as the number of sheets collected and stored between roller 7 and loop 19 is increasing.

Roller 30 is advantageously provided in housing 3 in such a way that, in cooperation with roller 29, it can make roller 26 and load 27 move in a substantially vertical plane as will be described hereinafter.

In fig. 3 apparatus 1 is represented in the same fixed operational position as in fig. 1, but with a number of sheets 31 already stored between loop 19 in endless belt 18 and third or pick-up roller 7.

The circumference of loop 19 around pick-up roller 7 is gradually increasing in proportion to the number of sheets that is inserted between them. As a consequence roller 26 and load 27 are gradually lifted in a vertical plane whilst still permanently tensioning endless belt 18, pressing thereby loop 19 against the stock of sheets 31 wrapped around the pick-up roller 7.

As the sheets are still wet, or at least moist, when they are collected and stored, it is advantageous to provide underneath apparatus 1 means (not shown) for collecting and/or draining off the processing liquid tht may be pressed out of sheets 31 under the influence of the continuous force with which loop 19 in belt 18 is pressing upon said sheets.

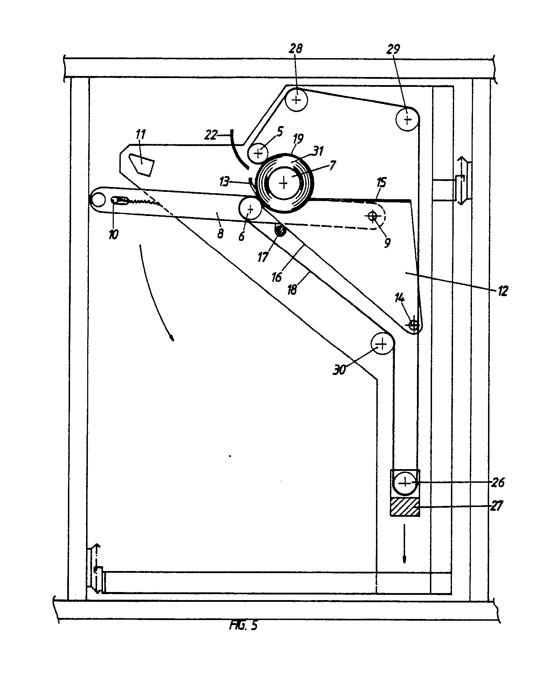

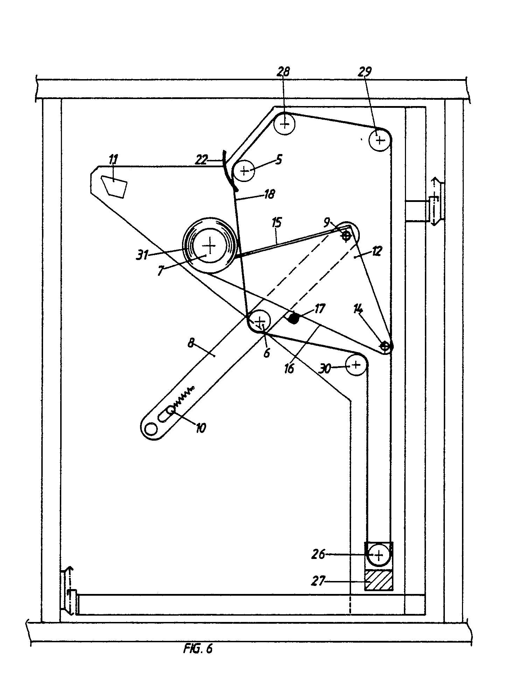

After a given number of sheets is collected and temporarily stored in the way described hereabove, apparatus 1 is moved out of its fixed operational position by unlocking means 10 provided in frame 8 (fig. 5) and by bringing the latter into its lower extreme position (fig. 6) whereby pick-up roller 7 and the stock of sheets 31 wrapped around said roller 7 are presented by guiding means 12 supporting roller 7 for having the latter removed together with the stock of sheets 31 wrapped around it.

In the position of fig. 6, roller 7 is prevented from falling down as it is retained by a hooked end or finger stop 13 (not visible in fig. 6) provided at the front end of rail 15 in guiding means 12.

The bringing down of frame 8 (fig. 6) results in moving apart second roller 6 from first roller 5, increasing thereby considerably the distance or gap between their facing surfaces and eliminating thereby loop 19 in endless belt 18. As a matter of fact, in the position for removal (fig. 6), endless belt 18 is directly conveyed over and from second roller 6 towards and over first roller 5, or vice versa, without forming a loop around pick-up roller 7 and sheets 31 anymore.

In figs. 5 and 6 the working principle of guiding means 12 is clearly illustrated and one can see how it is supported by the roller, pin or stud 17 secured to frame 8 whilst the latter is pivoting around hinge-pin 9 and whilst guiding means 12 are pivoting around hinge-pin 14. It is well understood that two guiding means 12 of the type described hereabove are provided on both sides of apparatus 1 in order to keep pick-up roller 7 perfectly in balance by supporting it at both its extremities.

When frame 8 is in its lower extreme position (fig. 6), roller 7 together with sheets 31 wrapped around it can easily be removed from apparatus 1 as roller 7 is completely set free and is merely supported by guiding means 12 which prevent roller 7 from falling down when frame 8 is brought in the said position for removal.

As the sheets 31 wrapped around pick-up roller 7 are collected and stored whilst still being moist or wet, they form a kind of compact hollow cylinder holding tightly around roller 7, even when the latter is completely set free from endless belt 18, i.e. in the position wherein pick-up roller 7 and the stock of wrapped-around sheets 31 can be removed from apparatus 1 (fig. 6).

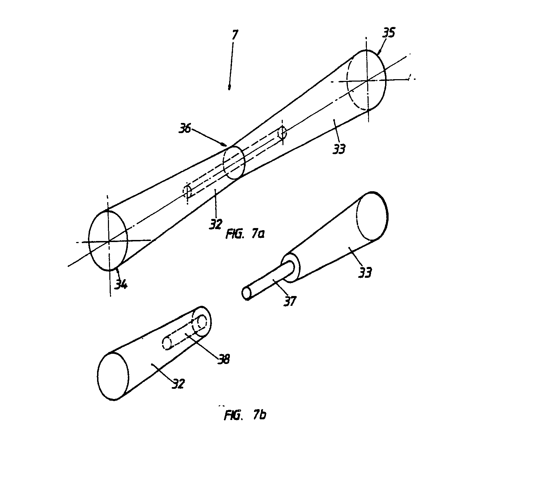

In order to overcome problems in the removing of sheets 31 from pick-up roller 7, the latter has been constructed in two truncated conical parts 32, respectively 33, connected to each other so that the diameter of pick-up roller 7 is larger at its extremities 34, respectively 35, than it is in its central area 36 (fig. 7a).

The parts 32 and 33 can advantageously be disconnected at the central part 36 of pick-up roller 7 in order to allow the disassembling of roller 7 whilst sheets 31 are still wrapped around it.

The truncated conical parts 32, respectively 33, can then easily be withdrawn from the hollow cylinder formed around them by sheets 31.

Advantageously, the smaller end of said truncated conical parts of roller 7 is provided with an axially extending pin 37 that frictionally or threadedly engages a corresponding axial pinhole 38 in the smaller end of the other truncated conical part of roller 7 (fig. 7b).

After removal of sheets 31 from pick-up roller 7, the latter can be reassembled and can directly be used again, whereas the sheets 31 can be conveyed, as a compact hollow cylinder, to a silver recovery plant, for instance.

Microswitches, proximity switches and/or photocells can be provided in and around apparatus 1 in order to detect the presence of a sheet conveyed towards apparatus 1, to control means for actuating and stopping endless belt 18, to evaluate the number of sheets 31 stored between pick-up roller 7 and loop 19, etc.

## Claims

1. Apparatus for successively collecting and temporarily storing sheets and the like, around a pick-up roller, comprising:
   — a first, a second and a third roller (5, 6 and 7 respectively) disposed parallel to each other, said third roller (7) being the pick-up or accumulator roller, said first roller (5) being supported by the housing (3) of said apparatus and said second roller (6) being supported by a frame (8) in said housing (3), wherein said frame is displaceable within said housing (3) between two extreme fixed positions,
   — at least one endless belt (18) running over said three rollers during the collecting of said sheets so as to form a loop (19) surrounding said third roller (7),
   — means (22) for feeding said sheets between said first (5) and said second (6) rollers and for conveying said sheets into a nip (24) formed by said third or pick-up roller (7) and said endless belt (18),
   — means (25) for tensioning said endless belt, and
   — means for actuating said endless belt,
   — means (12) for guiding and supporting said third roller (7) and comprising rails (15) freely supporting the third roller (7) at its extremities, wherein the relative positions of the axes of said first (5) and second (6) rollers are both fixed during the collecting operation, whereas the axis of said third roller (7) is capable of gradually moving away from the aforesaid axes of said first (5) and second (6) rollers according to the number of sheets that is fed into said apparatus and that is stored between said third roller (7) and said loop (19) in said endless belt (18), characterized in that said guiding and supporting means are pivotally secured to housing (3) by a hinge-pin (14) and comprise a hooked end or finger stop (13) and side portions (16) cooperating with pin or roller means (17) fixed to frame (8) and permanently supporting said guiding and supporting means (12) in any position of said frame (8).

2. Apparatus according to claim 1, characterized in that said loop (19) in said endless belt (18) is surrounding said third or pick-up roller (7) over a circumferential area corresponding to an angle of at least 270° when said apparatus is in its operational position for collecting the sheets.

3. Apparatus according to any of claims 1 to 2, characterized in that said endless belt (18) or belts is or are actuated by an electromotor, either directly or indirectly through the intermediary of one of said first (5) and/or second (6) roller and/or of one or more supplementary rollers provided along the circumference of said endless belt or belts.

4. Apparatus according to any of claims 1 to 3, characterized in that each of said rollers (5, 6, 7) and said endless belt (18) or belts has a surface that is chemically inert and has a friction coefficient that permits mutual frictional cooperation between said rollers, said sheets and said endless belt or belts.

5. Apparatus according to any of claims 1 to 4, characterized in that said means (25) for tensioning said endless belt or belts is a roller freely suspended within said endless belt or belts and is supporting a load tensioning said endless belt or belts permanently by gravity.

6. Apparatus according to any of claims 1 to 4, characterized in that said means (20) for tensioning said endless belt or belts is a spring means acting upon said endless belt or belts.

7. Apparatus according to any of claims 1 to 6, characterized in that said third or pick-up roller (7) consists of two truncated conical moieties (32, 33) connected to each other so that the diameter of said roller is larger at its extremities (34, 35) than it is in its central area and wherein said moities can be disconnected at the central area of said roller, the largest diameter of said roller being greater than the distance between the facing surfaces of said first (5) and second (6) rollers during the collecting of said sheets.

8. Apparatus according to claim 7, characterized in that the smaller base of one truncated conical moiety of said third roller (7) is provided with an axially extending pin (37) that frictionally or threadedly engages a corresponding axial pinhole (38) in the smaller base of the other truncated conical moiety of said roller.

9. Apparatus according to any of the preceding claims for use in the automatic processing of photographic peel-apart diffusion transfer materials to collect and temporarily store the image-wise exposed light-sensitive materials.

**Patentansprüche**

1. Gerät zum aufeinanderfolgenden Sammeln und zeitweiligen Bewahren von Blättern oder dergleichen um eine Aufwickelwalze, enthaltend:
— eine erste, eine zweite und eine dritte, parallel zueinander angeordnete Walzen (5, 6 bzw. 7), von denen letztere Walze (7) die Aufwickel- oder Sammlerwalze ist, die erste Walze (5) durch das Gehäuse (3) des Geräts getragen wird und die zweite Walze (6) durch den Rahmen (8) in diesem gehäuse (3) getragen wird, wobei der Rahmen (8) im Gehäuse (3) zwischen zwei äußersten, festen Stellen versetzbar ist,
— mindestens eine endloses Band (18), das während der Sammlung der Blätter über die drei Walzen läuft zum Bilden einer die dritte Walze (7) umhüllenden Schleife (19),
— Mittel (22) zum Einführen der Blätter zwischen die erste (5) und die zweite (6) Walze und zum Fördern der Blätter in einen durch die dritte oder Aufwickelwalze (7) und das endlose Band (18) gebildeten Spalt (24),
— Mittel (25) zum Spannen des endlosen Bandes,
— Mittel zum Betätigen des endlosen Bandes, und
— Mittel (12) zum Führen und Stützen der dritten Walze (7), welche Schienen (15) enthält, die die dritte Walze (7) an deren Enden beweglich gelagert unterstützt,
wobei die relativen Stellen der Achsen der ersten (5) und zweiten (6) Walzen während des Sammelvorganges beide fest sind, während die Achse der dritten Walze (7) sich entsprechend der Zahl der Blätter, die in das Gerät eingeführt werden und zwischen der dritten Walze (7) und der Schleife (19) des endlosen Bandes (18) gelagert werden, stufenweise von den Achsen der ersten (5) und zweiten (6) Walzen zu entfernen vermag, dadurch gekennzeichnet, daß die Führungs- und Stützmittel durch einen Scharnierstift (14) an dem Gehäuse (3) gelenkig befestigt sind und ein hakenförmiges Ende oder einen Fingeranschlag (13) und Seitenteile (16) haben, welche mit an Rahmen (8) befestigten Stiften oder Walzen (17) zusammenarbeiten und die Führungs- und Stützmittel (12) in beliebiger Stelle des Rahmens (8) beständig unterstützen.

2. Gerät nach Anspruch 1, dadurch gekennzeichnet, daß die Schleife (19) im endlosen Band (18) die dritte oder Aufwickelwalze (7) über eine mit einem Winkel von mindestens 270° übereinstimmende Umfangszone umhüllt, wenn das Gerät sich in zum Sammeln der Blätter wirksamer Stelle befindet.

3. Gerät nach irgendeinem der Anpsrüche 1—2, dadurch gekennzeichnet, daß das endlose Band (18) bzw. die endlosen Bänder entweder direkt oder indirekt mittels einer der ersten (5) und/oder zweiten (6) Walze und/oder einer oder mehrerer an der Peripherie des endlosen Bandes bzw. der endlosen Bändere vorgesehenen zusätzlichen Walzen von einem Elektromotor angetrieben wird bzw. werden.

4. Gerät nach irgendeinem der Ansprüche 1—3, dadurch gekennzeichnet, daß jede Walze (5, 6, 7) und jedes endlose Band (18) eine Oberfläche aufweist, welche chemisch inert ist und einem Reibungskoeffizienten hat, der eine durch Reibungskräfte bedingte Zusammenarbeit zwischen den Walzen, Blättern und endlosen Band oder endlosen Bändern zuläßt.

5. Gerät nach irgendeinem der Ansprüche 1—4, dadurch gekennzeichnet, daß die Mittel (25) zum Spannen des endlosen Bandes oder der endlosen Bänder eine innerhalb dieses endlosen Bandes oder dieser endlosen Bänder aufgehängte Walze ist und eine Belastung aufrechterhält, welche dieses endlose Band oder diese endlosen Bänder durch Schwerkraft fortwährend spannt.

6. Gerät nach ingendeinem der Ansprüche 1—4, dadurch gekennzeichnet, daß die Mittel (25) zum Spannen des endlosen Bandes oder der endlosen Bänder eine auf endlose Band oder diese endlosen Bänder wirkende Federvorrichtung ist.

7. Gerät nach irgendeinem der Ansprüche 1—6, dadurch gekennzeichnet, daß die dritte oder Aufwickelwalze (7) aus zwei derart miteinander verbundenen Kegelstumpfteilen (32, 33) besteht, daß der Durchmesser der Walze größer ist an ihren Enden (34, 35) als in ihrem Zentralbereich und wobei diese Teile im Zentralbereich dieser Walze getrennt werden können, wobei während der Sammlung der Blätter der größere Durchmesser der Walze den Abstand zwischen den einander zugekehrten Oberflächen der ersten (5) und der zweiten (6) Walzen übertrifft.

8. Gerät nach Anspruch 7, dadurch gekennzeichnet, daß die kleinere Grundfläche eines Kegelstumpfteils der dritten Walze (7) mit einem axial ausragenden Dorn (37) versehen ist, der durch Reibung oder mit Gewinde in ein entsprechendes axiales Dornloch (38) in der kleineren Grundfläche des anderen Kegelstumpfteils der Walze eingreift.

9. Gerät nach irgendeinem der vorhergehenden Ansprüche zur Verwendung bei der automatischen Entwicklung photographischer, zu trennender Diffusionsübertragungsmaterialien um die bildmäßig belichteten lichtempfindlichen Materialien zu sammeln und zweitung zu bewahren.

## Revendications

1. Appareil pour collecter et stocker temporairement des feuilles ou des objets semblables autour d'un rouleau de saisie, comprenant:

— un premier, un second et un troisième rouleaux (respectivement 5, 6 et 7) disposés parallèlement entre eux, le troisième rouleau (7) étant le rouleau de saisie ou d'accumulation, le premier rouleau (5) étant supporté par l'enveloppe (3) de l'appareil et le second rouleau (6) étant supporté par un châssis (8) situé dans l'enveloppe (3) et déplaçable à l'intérieur de l'enveloppe (3) entre deux positions extrêmes fixes,

— au moins une courroie dans fin (18) se déplaçant sur les trois rouleaux pendant la collecte des feuilles de manière à former une boucle (19) entourant la troisième rouleau (7),

— un dispositif (22) pour introduire ces feuilles entre le premier rouleau (5) et le second rouleau (6) puis dans un étranglement (24) formé par le troisième rouleau ou rouleau de saisie (7) et la courroie sans fin (18),

— un dispositif (25) pour tendre la courroie sans fin,

— un dispositif pour actionner la courroie sans fin, et

— un élément de guidage et de support (12) pour guider et supporter le troisième rouleau (7), qui comprend des rails (15) qui supportent librement ce rouleau à ses extrémités,

les positions relatives des axes du premier rouleau (5) et du second rouleau (6) étant toutes deux fixes pendant l'opération de collecte, tandis que l'axe du troisième rouleau (7) et capable de s'éloigner graduellement des axes du premier et dus second rouleaux suivant le nombre des feuilles qui sont introduites dans l'appareil et sont stockées entre le troisième rouleau (7) et la boucle (19) de la courroie sans fin (18), cet appareil présentant la caractéristique suivante: l'élément de guidage et de support est fixé pivotant sur l'enveloppe (3) au moyen d'un axe de pivotement (14) et comprend une extrémité en crochet ou un doigt d'arrêt (13) et des portions latérales (16) qui coopèrent avec un dispositif (17) d'axe ou de rouleau fixé au châssis (8) et supportant en permanence l'élément de guidage et de support (12) en toute position du châssis (8).

2. Appareil suivant la revendication 1, caractérisé en ce que la boucle (19) de la courroie sans fin (18) entoure le troisième rouleau (7) ou rouleau de saisie sur une zone circonférentielle correspondant à un angle d'au moins 270° quand l'appareil est dans sa position de fonctionnement pour la collecte des feuilles.

3. Appareil suivant l'une des revendications 1 et 2, caractérisé en ce que la ou les courroies sans fin (18) est ou sont actionnées par un moteur électrique, soit directement soit indirectement par l'intermédiaire du premier (5) et/ou du second (6) rouleau et/ou d'au moins un rouleau supplémentaire disposé sur la circonférence de la ou des courroies sans fin.

4. Aparreil suivant l'une quelconque des revendications 1 à 3, caractérisé en ce que chacun des rouleaux (5, 6, 7) et la ou les courroies sans fin (18) ont une surface qui est chimiquement inerte et possède un coefficient de frottement qui permet une coopération réciproque de frottement entre les rouleaux, les feuilles et la ou les courroies.

5. Appareil suivant l'une quelconque des revendications 1 à 4, caractérisé en ce que le dispositif (25) pour tendre la ou les courroies sans fin est un rouleau suspendu librement à l'intérieur de la ou des courroies sans fin et supporte en permanence par gravité une charge qui tend la ou les courroies sans fin.

6. Appareil suivant l'une quelconque des revendications 1 à 4, caractérisé en ce que le dispositif (25) pour tendre la ou les courroies sans fin est un dispositif à ressort qui agit sur la ou les courroies sans fin.

7. Appareil suivant l'une quelconque des revendications 1 à 6, caractérisé en ce que le troisième rouleau (7) ou rouleau de saisie est constitué par deux moitiés tronconiques (32, 33) reliées entre elles de manière que le diamètre du rouleau soit plus grand aux extrémités (34, 35) du rouleau qu'il ne l'est dans sa zone centrale, ces deux moitiés pouvant être séparées l'une de l'autre dans cette zone centrale et le diamètre le plus grand du rouleau étant plus grand que la distance entre les surfaces qui se ont face du premier (5) et du second (6) rouleaux pendant la collecte des feuilles.

8. Appareil suivant la revendication 7, caractérisé en ce que la plus petite base d'une moitié tronconique du troisième rouleau (7) est munie d'un axe (37) s'étandant axialement qui s'engage par frottement ou par vissage dans une cavité axiale correspondante (38) de la petite base de l'autre moitié tronconique du rouleau.

9. Appareil suivant l'une quelconque des revendications précédentes, destiné à être utilisé dans le traitement automatique de matériaux photographiques pour le transfert par diffision qui sont appliqués l'un contre l'autre et qu'on sépare l'un de l'autre, afin de collecter et de stocker temporairement les matériaux sensibles à la lumière qui sont exposés pour la formation d'un image.

*FIG.1*

FIG. 2

FIG. 3

FIG. 4

FIG. 5

0 095 790

5

FIG. 6

FIG. 7a

FIG. 7b